# EUROPÄISCHE PATENTSCHRIFT

(11) **EP 1 172 240 B1**
(45) Veröffentlichungstag und Bekanntmachung des Hinweises auf die Patenterteilung: **02.01.2004**
(21) Anmeldenummer: 01115736.9
(22) Anmeldetag: 06.07.2001
(51) Int. Cl.: B60H 1/00, B60H 3/06

(54) **Einschubfilter**
Plug-in filter
Filtre insérable

(30) Priorität: 15.07.2000 DE 10034487
(43) Veröffentlichungstag der Anmeldung: 16.01.2002
(73) Patentinhaber: MHB Filtration GmbH & CO. KG, 40699 Erkrath (DE)
(72) Erfinder: Holz, Steffen, 40822 Mettmann (DE); Hoppmann, Daniel, 40629 Düsseldorf (DE); Hüngsberg, Ulrich, 45276 Essen (DE); Hüppmeier, Volker, 33102 Paderborn (DE); Isensee, Hans-Jürgen, 71672 Marbach (DE); Mierau, Kai, 40822 Mettmann (DE); Weiss, Stefan, Dr., 81827 München (DE); Baumann, Christoph, 71696 Möglingen (DE); Dirnberger, Timo, 71672 Marbach (DE); Maier, Stefan, 74354 Besigheim (DE); Scholl, Hans-Peter, 74395 Mundelsheim (DE)
(74) Vertreter: Voth, Gerhard, Dipl.-Ing.

(56) Entgegenhaltungen:
- EP-A- 0 900 585
- DE-C- 4 234 047
- FR-A- 2 727 903
- FR-A- 2 741 568

## Beschreibung

Die Erfindung betrifft einen Einschubfilter nach dem Oberbegriff des Patentanspruches 1.

Das Dokument FR 2 741 568 offenbart einen Einschubfilter, zur Reinigung eines Gasstromes welcher in einem Schacht eines gasführenden Leitungssystems austauschbar angeordnet ist. Der Einschubfilter besteht aus einem Filterrahmen einem Filterelement und einem Schachtdeckel, wobei der Schachtdeckel mit dem Filterrahmen verbunden ist.

Es ist aus der DE 42 34 047 ein, von einer Kassette aufgenommener Filter bekannt, welcher in einen Schacht eines Kanals einer Lüftungs- oder Klimaanlage eingeschoben wird. Der Schacht wird mit einem Deckel verschlossen und mit Klammern verspannt. Die Klammern sind auf Verriegelungsstegen verschiebbar. Die Verriegelungsstege sind sowohl auf dem Deckel als auch auf dem Kanal angeordnet. Der Filter weist einen Filterrahmen auf, welcher mit drei Seiten in den Schacht eintaucht, wobei der Deckel die vierte Seite des Filterrahmens bildet und ebenfalls in den Schacht eintaucht. Der Schacht ist derart ausgebildet, dass er sich ausgehend von einer Einschubseite stetig verjüngt, wodurch eine zum Einschieben des Filters benötigte Einschubkraft gering ist und Dichtungen erst in im vollständig eingebauten Zustand rundherum zur Anlage kommen. Die Dichtungen, welche der Einschubseite gegenüber liegen, werden beim Verriegeln des Deckels mit dem Kanal fest gegen den Schacht gepresst.

Zur Entfernung des Filters aus dem Schacht müssen zuerst die Klammern zur Seite geschoben werden. Anschließend ist eine Zugkraft erforderlich, welche den Filter aus dem Schacht zieht. Um diese Zugkraft jedoch auf den Filter zu übertragen ist eine zusätzliche Entnahmehilfe erforderlich, da sich der Deckel selbst nicht greifbar in dem Schacht befindet. Diese Entnahmehilfe ist somit für jeden Austausch des Filters unbedingt erforderlich. Die Verwendung einer zusätzlichen Entnahmehilfe ist jedoch umständlich und bei einem Verlust der Entnahmehilfe kann der Filter nicht ausgetauscht werden.

Daher besteht die Aufgabe der Erfindung darin, einen Einschubfilter zu schaffen, welcher in einen Schacht eines gasführenden Leitungssystems einbringbar ist, wobei der Einschubfilter ohne zusätzliche Entnahmehilfen aus dem Schacht entfernbar ist und eine geringe Leckage erreicht wird.

Diese Aufgabe wird durch die Merkmale des Patentanspruches 1 gelöst.

Der erfindungsgemäße Einschubfilter ist in einem Schacht eines gasführenden Leitungssystems angeordnet und dient der Reinigung eines Gasstromes. Das Leitungssystem kann z.B. Ansaugluft für eine Brennkraftmaschine, Raumluft für einen Reinraum oder ein anderes Gas für einen Gasverbraucher führen. Der Einschubfilter ist durch einen Filterrahmen, ein von dem Filterrahmen gestütztes Filterelement und einen, mit dem Filterrahmen verbundenen Schachtdeckel gebildet, wobei das Filterelement durch ein Filtermedium mit Randbegrenzung oder nur durch ein Filtermedium wie z.B. Vlies oder Papier gebildet sein kann. Weiterhin kann der Filterrahmen aus unterschiedlichsten Materialien wie z.B. Vlies, thermoplastischer Kunststoff oder Metall bestehen. Der Einschubfilter ist derart in den Schacht eingebracht, dass er eine Rohseite von einer Reinseite trennt.

Entsprechend dem Filterelement mit seiner Filterfeinheit ist ein Leckluftstrom zwischen dem Einschubfilter und dem Schacht zulässig oder nicht. Bei einem groben Filterelement, welches nur grobe Verunreinigungen ausfiltert, ist ein gewisser Leckluftstrom zulässig. Bei einem feinen Filterelement, wie z.B. für Reinräume, ist kein Leckluftstrom zulässig. Hierbei ist eine Abdichtung zwischen dem Einschubfilter und dem Schacht vorzusehen, welche z.B. an dem Schacht angeordnet sein kann.

Damit der Einschubfilter ohne eine zusätzliche Entnahmehilfe aus dem Schacht entfernt werden kann, ist der Filterrahmen, welcher sich vollständig in dem Schacht befindet, mit dem Schachtdeckel verbunden. Hierbei kann die dem Schachtdeckel zugewandte Seite des Filterrahmens höher ausgebildet sein, als die übrigen Seiten. Dadurch ist eine größere Verbindungsfläche zum Befestigen des Schachtdeckel an dem Filterrahmen vorhanden. Der Schachtdeckel ist derart ausgestaltet, dass er beim Austauschen des Einschubfilters gut erfaßt werden kann. Dies kann z.B. durch einen Wulst oder Aussparungen erzielt werden. Die zwischen dem Filterrahmen und dem Schachtdeckel bestehende Verbindung ist derart ausgestaltet, dass die, zum Entfernen des Einschubfilters aus dem Schacht erforderliche Zugkraft übertragen werden kann. Der Schacht kann in Richtung Schachtoberseite zu Schachtboden ganz oder teilweise schräg verlaufen, wodurch das Einführen des Einschubfilters in den Schacht erleichtert wird.

Der Schachtdeckel kann lösbar oder unlösbar mit dem Filterrahmen verbunden sein. Hierbei kann eine unlösbare Verbindung z.B. durch Kleben oder Schweißen erzeugt sein. Lösbare Verbindungen zwischen dem Schachtdeckel und dem Filterrahmen können formschlüssig oder kraftschlüssig gebildet sein. Hierbei können z.B. Schrauben, Haken, Klammern, Federn oder Passungen verwendet werden. Weiterhin kann der Schachtdeckel in eine Aufnahmenut an dem Filterrahmen eingeschoben werden. Bei anderen Ausführungen kann die Aufnahmenut auch an dem Schachtdeckel angeordnet sein.

Der Schachtdeckel kann über Befestigungseinheiten verfügen, mit welchen der Schachtdeckel mit dem Schacht verbunden wird, so dass ein unkontrolliertes Lösen des Einschubfilters aus dem Schacht verhindert wird. Hierzu können z.B. Schrauben, Verrastungen oder Passungen dienen.

Eine besondere Ausführungsform der Erfindung wird durch den Filterrahmen mit einer Rahmenwand gebildet, welche einen Filterbereich umschließt, in welchen das Filterelement eingelegt wird. Das Filterelement kann bei dieser Ausführung z.B. durch ein Filtervlies, einen Aktivkohlefilter, ein Filterpapier oder einen Filz gebildet werden, wobei diese Filtermedien auch gefaltet sein können. Die Rahmenwand verläuft umlaufend schräg zu dem Filterbereich, wodurch das eingelegte Filterelement in einem unteren umlaufenden Bereich in der Nähe der Rahmenwand verdichtet wird. Diese Verdichtung des Filterelementes verringert die Leckage zwischen dem Filterrahmen und dem Filterelement. Zur besseren Fixierung des Filterelementes kann das Stützkreuz das Filterelement tiefer in den Filterrahmen eindrücken.

Gemäß einer weiteren Ausgestaltung der Erfindung ist die Verbindung zwischen dem Filterrahmen und dem Schachtdeckel lösbar ausgeführt. Dadurch kann der Schachtdeckel, nachdem der Filterrahmen aus dem Schacht entfernt ist, von dem Filterrahmen getrennt werden. Dies ist besonders bei Wechselfiltern, bei denen der Filterrahmen und das Filterelement entsorgt werden müssen, sinnvoll, da der Schachtdeckel weiter verwendet werden kann. Die Verwendung von Schnapphaken zur Verbindung des Filterrahmens mit dem Schachtdeckel stellt eine vorteilhafte Lösung dar, da keine zusätzlichen Befestigungselemente erforderlich sind, wodurch Kosten und Montagezeit eingespart werden können. Der Schachtdeckel wird mit dem Filterrahmen verschnappt, wobei die Schnapphaken zurück federn und im montierten Zustand den Filterrahmen mit dem Schachtdeckel zusammen hält.

Es ist vorteilhaft, an dem Schachtdeckel eine integrierte Entnahmehilfe anzuordnen, wodurch die zur Entnahme erforderliche Zugkraft besser auf den Schachtdeckel übertragbar ist. Diese integrierte Entnahmehilfe kann z.B. durch eine Aushebelasche, eine Eingriffhöhle oder einen Griff gebildet werden. Der Griff kann über einen oder mehrere Befestigungspunkte an dem Schachtdeckel verfügen, wodurch unterschiedlichste Ausgestaltungen wie z.B. ein Knauf oder ein Bügel denkbar sind.

Eine weitere Variante der Erfindung weist eine umlaufende Rahmendichtung am Filterrahmen auf, welche sich an dem Schacht abstützt. Diese Rahmendichtung besteht aus einem Material, welches Dichteigenschaften besitzt, hierbei kann die Rahmendichtung aus dem gleichen Material wie der Filterrahmen oder aus einem anderen Material bestehen. Die Rahmendichtung, kann lose z.B. in eine Nut am Filterrahmen eingelegt werden oder fest z.B. mit Klebstoff oder im Zwei-Komponentenspritzguss mit dem Filterrahmen verbunden sein. Weiterhin kann die Rahmendichtung verschieden ausgestaltet sein. Eine Möglichkeit sieht die Verwendung einer Dichtlippe vor, welche sich beim Einschieben des Filterrahmens in den Schacht an diesen anlegt. Eine weitere Möglichkeit der Ausgestaltung der Rahmendichtung ist die Anordnung mehrerer kleiner Lamellen, welche sich an den Schacht anlegen.

Es ist vorteilhaft, ein Stützkreuz zur Stabilisierung des Filterelementes an dem Filterrahmen anzuordnen. Dieses Stützkreuz kann durch eine Längsstrebe und eine Querstrebe gebildet werden, welche dem Filterelement eine Stütze gegen ein, durch den Gasstrom verursachtes Durchbiegen bietet. Weitere Ausführungen, welche mehrere Längs- und/oder Querstreben aufweisen, sind denkbar. Dieses Stützkreuz kann z.B. in den Filterrahmen eingespannt oder mit ihm verschraubt sein.

Eine besondere Ausführungsform der Verbindung des Stützkreuzes mit dem Filterrahmen besteht in einer Feder-Nut-Verbindung, in welcher das Stützkreuz mit einer speziell ausgebildeten Feder in eine Nut im Filterrahmen eingreift, wodurch das Filterelement fixiert ist. Diese Verbindung kann z.B. beim Wechsel des Filterelementes gelöst und anschließend erneut erzeugt werden.

Gemäß einer besonderen Ausgestaltung der Erfindung ist der erfindungsgemäße Einschubfilter als Luftfilter für eine Brennkraftmaschine vorgesehen. Bei den immer engeren Platzverhältnissen im Motorraum läßt sich dabei ein Filtergehäuse konzipieren, welches durch den Deckel nach oben hin geöffnet werden kann, um das Filterelement auszuwechseln. Daher ist kein Ausbauraum für das Filterelement innerhalb des Motorblocks notwendig. Vielmehr kann das Filterelement nach oben entnommen werden, also in die Richtung wo das Filtergehäuse an die Motorhaube angrenzt. Besonders vorteilhaft ist dabei die Anordnung jeweils eines Filtergehäuses rechts und links des Motorblockes. Hierbei können weitere Verschalungen diese beiden Filtergehäuse miteinander verbinden, wodurch zusätzlich eine Geräuschdämmung hervorgerufen werden kann. Außerdem dient die beidseitige Anordnung des Filterelementes weiterhin Gesichtspunkten einer optimalen Luftverteilung beispielsweise für eine Kraftmaschine mit V-förmiger Anordnung der Zylinder.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Weitere Einzelheiten der Erfindung werden in den Zeichnungen anhand von schematischen Ausführungsbeispielen beschrieben.

Hierbei zeigt
- Figur 1: einen Einschubfilter in einem Schacht im Schnitt,
- Figur 2: einen Einschubfilter in einem Schacht im Schnitt,
- Figur 3: einen Einschubfilter im Teilschnitt,
- Figur 4: einen Einschubfilter im eingebauten Zustand in der Draufsicht,
- Figur 5: einen Einschubfilter in einem Schacht im Schnitt und
- Figur 6: einen Filterrahmen in der Hauptansicht.
- Figur 7: einen Anwendungsfall des erfindungsgemäßen Einschubfilters als Luftfilter für eine Brennkraftmaschine in perspektivischer Ansicht.

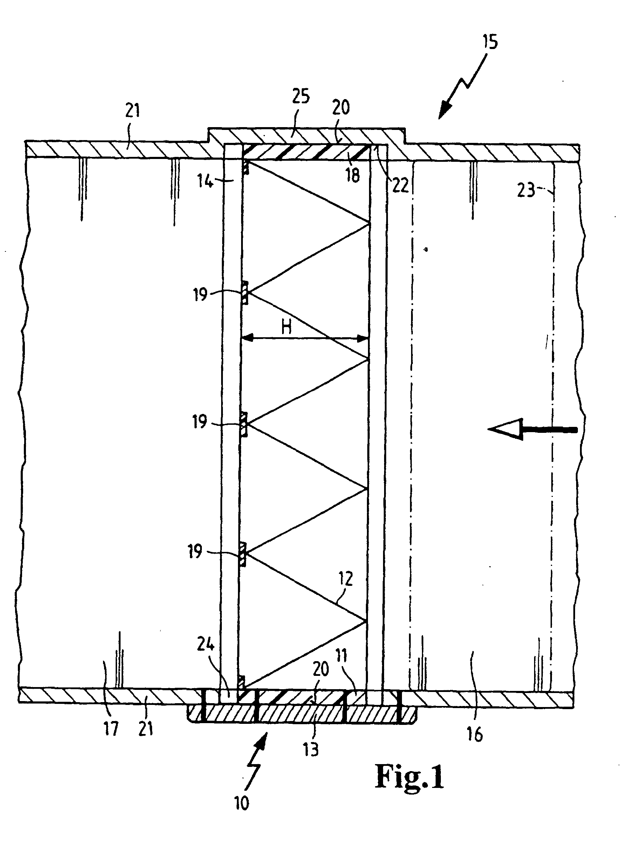

In Figur 1 ist ein Einschubfilter 10 im Schnitt dargestellt. Der Einschubfilter 10 wird durch einen rechteckigen Filterrahmen 11 mit einer Höhe H, ein zick-zack-förmig gefaltetes, rechteckiges Filterelement 12 und einen Schachtdeckel 13 gebildet, wobei das Filterelement 12 ebenfalls die Höhe H aufweist und von dem Filterrahmen 11 gestützt ist. Das Filterelement 12 kann bei anderen Ausführungen zur Erhöhung der Stabilität und zur Reduzierung eines Leckagestroms einen umlaufenden Rand (nicht dargestellt) aus z.B. einer Gummimischung aufweisen. Der Filterrahmen 11 weist eine umlaufende, im wesentlichen konstante Rahmenwand 18 auf, an welcher Anlagepunkte 19 zur Abstützung des Filterelementes 12 angeordnet sein können, und ist in einen Schacht 14 eines gasführenden Leitungssystems 15 eingebracht. Das Leitungssystem 15 wird von einer Leitungswand 21 gebildet und umschließt einen rechteckigen Strömungsquerschnitt 23. Es sind aber auch Strömungsquerschnitte 23 mit beliebiger geometrischer Ausbildung wie z.B. oval oder dreieckig denkbar Der Schacht 14 ist Teil des Leitungssystems 15, und besitzt eine Schachtöffnung 24 und einen Schachtboden 25. Der Filterrahmen 11 ist in den Schacht 14 eingebracht und liegt mit einer Außenseite 20 an einer Innenseite 22 des Schachtes 14 an, wodurch eine Rohseite 16 von einer Reinseite 17 getrennt wird. Bei diesem Ausführungsbeispiel ist der Schachtboden 25 etwas zurückgesetzt, damit das Filterelement 12 möglichst den gleichen Strömungsquerschnitt 23 wie das Leitungssystem 15 aufweisen kann. Der Schachtdeckel 13 ist mit dem Filterrahmen 11 an dessen Außenseite 20 verbunden und verschließt die Schachtöffnung 24, so dass kein Gas aus dem Leitungssystem 15 austreten kann. Der Schachtdeckel 13 kann mit dem Filterrahmen 11 fest durch z.B. Verkleben oder Verschweißen oder lösbar durch z.B. Verschrauben oder Verspannen verbunden sein. Damit der Einschubfilter 10 sich nicht unkontrolliert aus dem Schacht 14 löst, kann der Schachtdeckel 13 über der Schachtöffnung 24 an dem Leitungssystem 15 befestigt werden, wobei der Schachtdeckel 13 von seinen Abmessungen größer ausgeführt ist, als die Schachtöffnung 24. Dadurch überdeckt der Schachtdeckel 13 die Schachtöffnung 24 vollständig und zusätzlich noch einen Teil der Leitungswand 21 um die Schachtöffnung 24 herum.

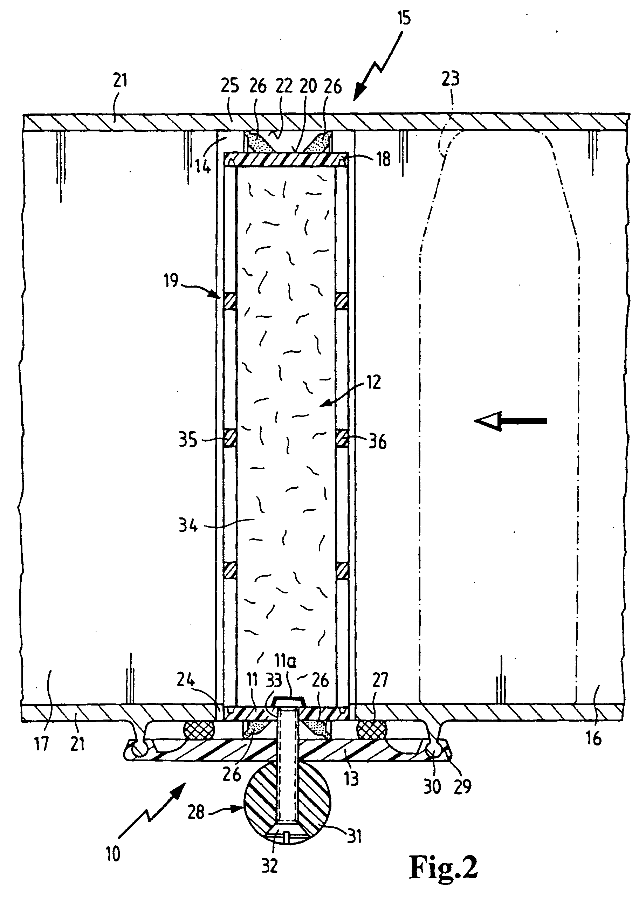

In Figur 2 ist ein Einschubfilter 10 im eingebauten Zustand im Schnitt dargestellt. Der Einschubfilter 10 weist einen Filterrahmen 11, ein Filterelement 12, einen Schachtdeckel 13, eine Rahmendichtung 26 und eine Entnahmehilfe 28 auf und ist in den Schacht 14 eingebracht, welcher eine Schachtöffnung 24 und einen, der Schachtöffnung 24 gegenüberliegenden Schachtboden 25 aufweist.

Der Schachtboden 25 ist bei dieser Ausführung in einer Ebene mit der Leitungswand 21 ausgeführt und nicht, wie bei Figur 1, abgesetzt. Der Filterrahmen 11 ist derart ausgeführt, dass er von der Schachtöffnung 24 in Richtung Schachtboden 25 zunächst rechteckig, dann aber schräg verläuft, wodurch die Einschubkräfte reduziert werden. Um die Strömungsverhältnisse in dem Leitungssystem 15 positiv zu beeinflussen, ist die Geometrie des Filterrahmens 11 dem Strömungsquerschnitt 23 angepaßt.

Die Rahmendichtung 26 verläuft an der Außenseite 20 des Filterrahmens 18 und liegt an der Innenseite 22 des Schachtes 14 an. Im Bereich der Schachtöffnung 24 verläuft die Rahmendichtung 26 zwischen dem Filterrahmen 11 und dem Schachtdeckel 13, wodurch ein Leckagestrom zwischen dem Schachtdeckel 13 und dem Filterrahmen 11 verhindert wird und so die Trennung zwischen der Rohseite 16 und der Reinseite 17 gewährleistet ist. Damit das in dem Leitungssystem 15 strömende Gas nicht zwischen dem Einschubfilter 10 und der Leitungswand 21 entweichen kann, ist zwischen dem, die Schachtöffnung 24 verschließenden Schachtdeckel 13 eine Deckeldichtung 27 angeordnet. Diese Deckeldichtung 27 wird bei diesem Ausführungsbeispiel durch einen O-Ring gebildet, welcher lose zwischen den Schachtdeckel 13 und die Leitungswand 21 eingebracht ist. Bei anderen Ausführungen können Formdichtungen, welche von unterschiedlichen Dichtmaterialien gebildet werden können, lose oder in dafür vorgesehene Aussparungen (nicht dargestellt) eingebracht werden.

Zur Befestigung des Einschubfilters 10 in dem Schacht 14 ist an dem Schachtdeckel 13 eine umlaufende Aufnahme 29 angeordnet, in welche ein, an der Leitungswand 21 außen umlaufender Befestigungsrand 30 eingreift und so den Einschubfilter 10 in dem Schacht 14 fixiert. Um den Einschubfilter 10 aus dem Schacht 14 zu entfernen ist eine, mit dem Schachtdeckel 13 verbundene Entnahmehilfe 28 vorgesehen, welche durch einen Knauf 31 gebildet ist. Der Knauf 31 ist mit einer Schraube 32 an dem Schachtdeckel 13 und dem Filterrahmen 11 befestigt. Andere an dem Schachtdeckel 13 angeordnete Entnahmehilfen wie z.B. eine Ringmutter sind ebenfalls möglich. Damit zwischen der Schraube 32 und dem Filterrahmen 11 bzw. dem Schachtdeckel 13 kein Gas austreten kann, ist eine Schutzkappe 11a in dem Filterrahmen 11 angeordnet, welche die Schraube 32 und ihre Gewindebohrung 33 gasdicht abdeckt.

Das Filterelement 12 ist durch ein Filtervlies 34 gebildet, welches keine Randbegrenzungen aufweist. Damit sich das Filtervlies 34 durch das durchströmende Gas nicht verformt und zwischen dem Filtervlies 34 und dem Filterrahmen 11 eine Leckage entsteht, sind Anlagepunkte 19 in Form von durchgängigen Stegen 35, welche einteilig mit dem Filterrahmen 11 ausgeführt sind, vorgesehen. Diese Stege 35 verlaufen durchgehend parallel und/oder senkrecht zu der Rahmenwand 18. Damit das Filtervlies 34 nicht aus dem Filterrahmen 11 herausfallen kann, ist ein Stützkreuz 36 auf dem Filterrahmen 11 angeordnet, welches den Stegen 35 gegenüber liegt, wodurch das Filtervlies 34 zwischen den Stegen 35 und dem Stützkreuz 36 eingespannt ist. Das Stützkreuz 36 ist bei dieser Ausführung mit dem Filterrahmen 11 verschnappt, bei anderen Ausführungen sind jedoch andere Befestigungsarten durch z.B. Verschrauben oder Verschweißen möglich.

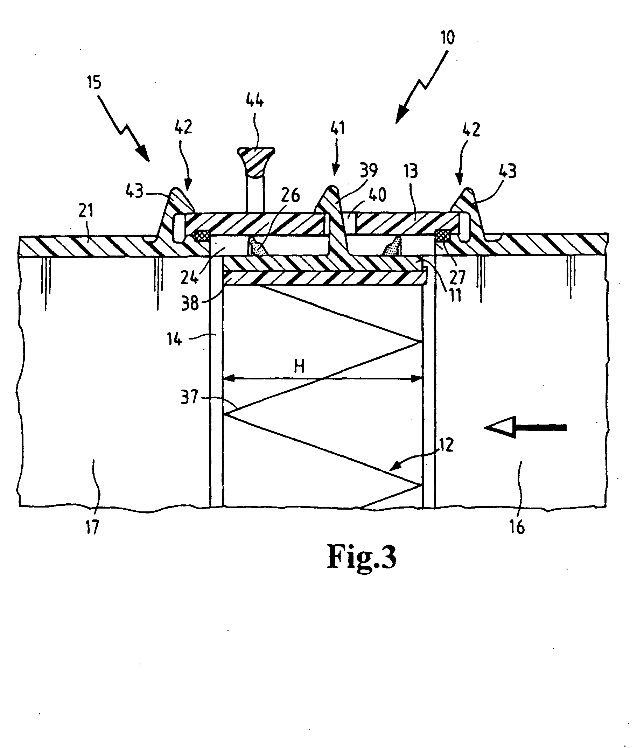

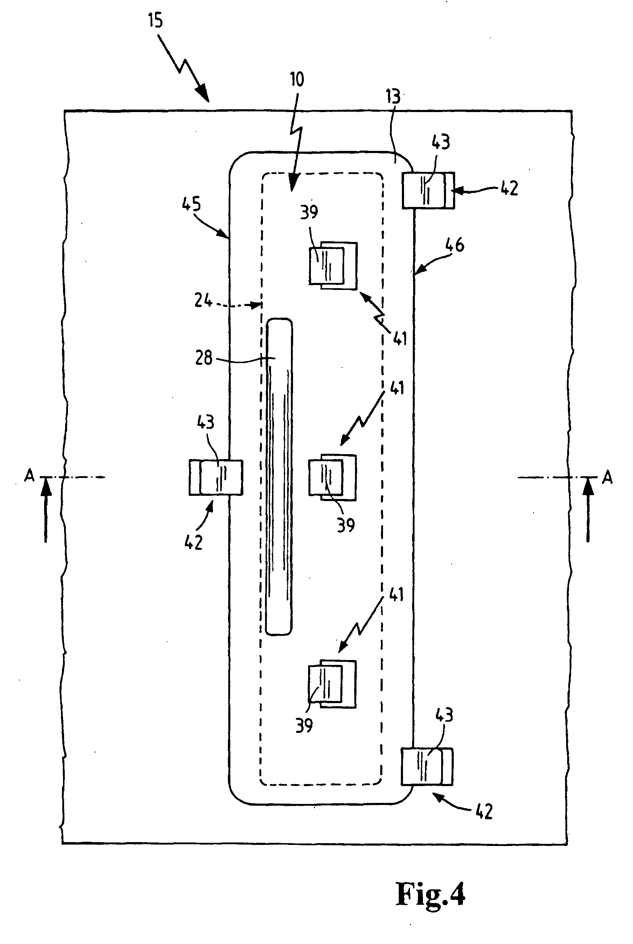

In Figur 3 ist ein Einschubfilter 10 im eingebauten Zustand im Teilschnitt entlang der Schnittlinie A-A gemäß Figur 4 dargestellt. Der Einschubfilter 10 wird durch ein Filterelement 12, einen Filterrahmen 11 und einen Schachtdeckel 13 gebildet. Das Filterelement 12 ist durch ein zick-zack-förmig gefaltetes Filtermedium 37 und eine, das Filtermedium 37 umgebende Filterbegrenzung 38 gebildet, welche zwischen dem Filtermedium 37 und dem Filterrahmen 11 angeordnet ist. Die Filterbegrenzung 38 stützt das Filtermedium 37 am Umfang und besitzt Dichteigenschaften, welche eine Leckage zwischen Filtermedium 37 und Filterrahmen 11 verhindert. Zur Vermeidung eines Leckagestroms zwischen dem Filterrahmen 11 und dem Schachtdeckel 13 ist eine umlaufende Rahmendichtung 26 vorgesehen, welche im Zwei-Komponentenspritzguss mit dem Filterrahmen 11 gefertigt ist. Zur Verbindung des Filterrahmens 11 mit dem Schachtdeckel 13 ist ein Schnapphaken 39 vorgesehen, welcher durch ein, in dem Schachtdeckel 13 angeordnetes Fenster 40 hindurch ragt und eine erste Schnappverbindung 41 erzeugt. Zur Fixierung des Einschubfilters 10 in dem Schacht 14 ist eine zweite Schnappverbindung 42 vorgesehen, welche mit Haken 43 den Schachtdeckel 13 über der Schachtöffnung 24 halten. Zur Zentrierung des Schachtdeckels 13 sind mehrere zweite Schnappverbindungen 42 sich gegenüberliegend angeordnet. Die Haken 43 sind mit der Leitungswand 21 verbunden, wodurch der Schachtdeckel 43 immer in der gleichen Lage eingebaut wird. Zur Montage werden die Haken 43, bis der Schachtdeckel 13 auf der Leitungswand 21 aufliegt, zurückgebogen. Nachdem der Schachtdeckel 13 aufliegt, federn die Haken 43 zurück und fixieren so den Schachtdeckel 13 auf der Schachtöffnung 24. Damit zwischen dem Schachtdeckel 13 und der Leitungswand 21 kein Gas ausströmen kann, ist eine Deckeldichtung 27 vorgesehen, welche umlaufend um die Schachtöffnung 24 angeordnet ist. Zur Entnahme des Einschubfilters 10 aus dem Schacht 14 ist ein Bügel 44 vorgesehen, welcher fest mit dem Schachtdeckel 13 verbunden und gut greifbar ist, wodurch das Herausziehen des Einschubfilters 10 erleichtert wird.

In Figur 4 ist ein Einschubfilter 10 gemäß Figur 3 im eingebauten Zustand in der Draufsicht dargestellt. Der Schachtdeckel 13 verschließt die Schachtöffnung 24 vollständig. Damit der Schachtdeckel 13 nicht verrutschen kann, sind drei zweite Schnappverbindungen 42 vorgesehen, wobei eine einzelne zweite Schnappverbindung 42 auf einer ersten Längsseite 45 und zwei zweite Schnappverbindungen 42 auf einer zweiten Längsseite 46 des Schachtdeckels 13 angeordnet sind. Zur Optimierung der Fixierung können noch weitere zweite Schnappverbindungen 42 am Umfang des Schachtdeckel 13 verteilt angeordnet sein. Weiterhin kann der Schachtdeckel 13 derart ausgeformt sein, dass die Haken 43 geführt sind, wodurch der Schachtdeckel 13 auch quer zu den Längsseiten 45, 46 fixiert ist. Bei diesem Ausführungsbeispiel sind drei erste Schnappverbindungen 41 vorgesehen, welche mit Schnapphaken 39 den Filterrahmen 11 (nicht dargestellt) mit dem Schachtdeckel 13 verbinden. Die Entnahmehilfe 28, welche fest mit dem Schachtdeckel 13 verbunden ist, kann von dem Monteur mit der Hand erfaßt werden und so den Einschubfilter 10 aus dem Schacht 14 (nicht dargestellt) entfernen.

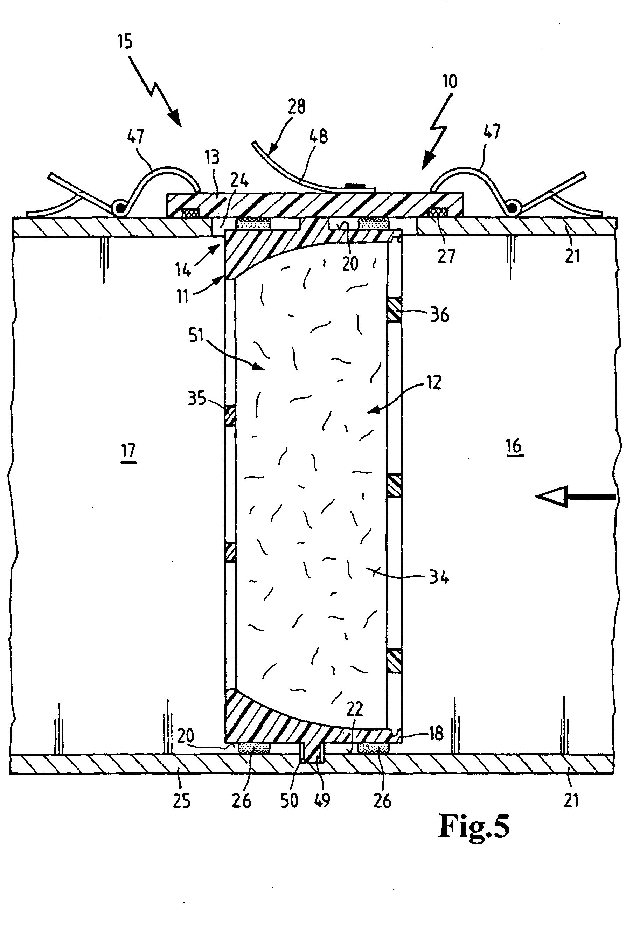

In Figur 5 ist ein Einschubfilter 10 in einem Schacht 14 im Schnitt dargestellt. Bei dieser Ausführung der Erfindung ist der Schachtdeckel 13 mit Spannhaken 47 auf der Leitungswand 21 fixiert. Die Spannhaken 42 lassen sich zur Montage öffnen und bei eingebrachtem Einschubfilter 10 schließen. Dann verspannt sich der Spannhaken 47 auf dem Schachtdeckel 13 und verhindert so auch bei Vibrationen und Stößen ein unkontrolliertes Lösen des Einschubfilters 10. Zum Entfernen des Einschubfilters 10 aus dem Schacht 14 ist eine Entnahmehilfe 28 in Form einer Aushebelasche 48 vorgesehen, welche unlösbar mit dem Schachtdeckel 13 verbunden ist. Durch Ziehen an dieser Aushebelasche 48 wird der Einschubfilter 10 aus dem Schacht 14 entfernt. Da die Aushebelasche 48 fest mit dem Gehäusedeckel 13 verbunden ist, kann der Einschubfilter 10 ohne eine zusätzliche Entnahmehilfe entnommen werden.

Der Filterrahmen 11 weist eine außen umlaufende Führungsleiste 49 auf, welche in einer Führungsnut 50 geführt ist. Die Führungsnut 50 verläuft in der Leitungswand 21 von der Schachtöffnung 24 über den Schachtboden 25 bis zur anderen Seite der Schachtöffnung 24. Die Führungsnut 50 und die Führungsleiste 49 sind derart zueinander ausgelegt, dass der Einschubfilter 10 mit geringem Kraftaufwand in den Schacht 14 eingeführt werden kann, wobei jedoch eine ausreichende Führung gewährleistet ist. Links und rechts der Führungsleiste 49 ist jeweils eine umlaufende Rahmendichtung 26 angeordnet.

Die Rahmenwand 18 des Filterrahmens 11 umschließt einen Filterbereich 51, in welchen das Filterelement 12 eingebracht ist. Die Rahmenwand 18 ist umlaufend derart ausgebildet, dass sie im Bereich des Stützkreuzes 36 die geringste Wandstärke aufweist. Je weiter die Rahmenwand 18 in Richtung der, dem Stützkreuz 36 gegenüberliegenden, Stege 35 verläuft, vergrößert sich die Wandstärke, wodurch sich der Filterbereich 51 in diesen Bereichen verringert. Das Filterelement 12 wird bei dieser Ausführung von einem Filtervlies 34 gebildet, welches im nicht-eingebauten Zustand quaderförmig, also mit sechs ebenen Flächen, ausgebildet ist. Nachdem das Filtervlies 34 in den Filterbereich 51 eingebracht ist, sind die ebenen Flächen, welche mit dem Filterrahmen 11 in Kontakt stehen verformt, wodurch sich in diesen Bereichen das Filtervlies 34 komprimiert und eine Leckage zwischen Filtervlies 34 und Filterrahmen 11 verringert. Das Stützkreuz 36 und die Stege 35 geben dem Filtervlies 34 Halt, damit es nicht aus dem Filterrahmen 11 heraus fällt.

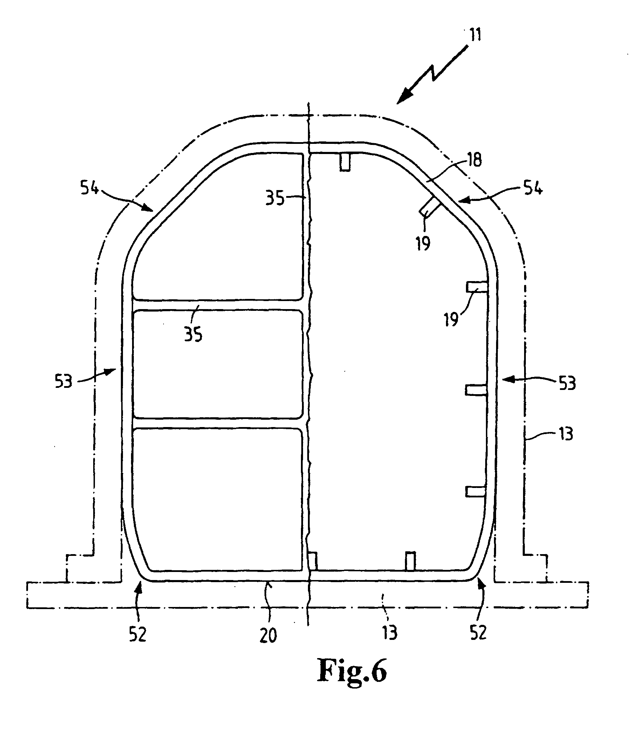

In Figur 6 ist ein Filterrahmen 11 in der Hauptansicht dargestellt, wobei die linke und die rechte Bildhälfte unterschiedliche Ausführungen zeigen. Der Filterrahmen 11 ist für die Aufnahme eines Flachfilters (nicht dargestellt) ausgelegt und weist eine umlaufende Rahmenwand 18 auf, an welcher außen umlaufende Rahmendichtungen 26 (nicht dargestellt) angeordnet sein können. Der Filterrahmen 11 weist Rundungen 52 auf, welche von dem Schachtdeckel 13 (strichpunktiert dargestellt) aufgenommen werden. An die Rundungen 52 schließt ein Parallelbereich 53 an, in welchem die linke und rechte Rahmenwand 18 parallel verläuft. An den Parallelbereich 53 schließt ein Winkelbereich 54 an, welcher an den Schacht 14 (strichpunktiert dargestellt) angepaßt ist. Durch den Winkelbereich 54 wird die zur Montage des Einschubfilters 10 erforderliche Einschubkraft reduziert.

Damit das Filterelement 12 (nicht dargestellt) in dem Filterrahmen 11 einen besseren Halt erhält, sind, wie auf der linken Bildhälfte dargestellt, Stege 35 angeordnet, welche mit dem Filterrahmen 11 bzw. mit der Rahmenwand 18 einteilig gefertigt sind. Eine zweiteilige Fertigung des Filterrahmens 11 mit den Stegen 35 ist selbstverständlich auch möglich. Diese Stege 35 verlaufen senkrecht und waagerecht zu dem Parallelbereich 53 und sind schmal ausgeführt, wodurch der Luftwiderstand möglichst gering gehalten wird. Andere Ausführungen der Stege 35 sind breiter mit evtl. luftdurchlässigen Partien. Auf der rechten Bildhälfte sind Anlagepunkte 19 dargestellt, auf welchen das Filterelement am Umfang aufliegen und sich abstützen kann. Diese Auflagepunkte 19 können auch als längere Auflagestreben ausgebildet sein.

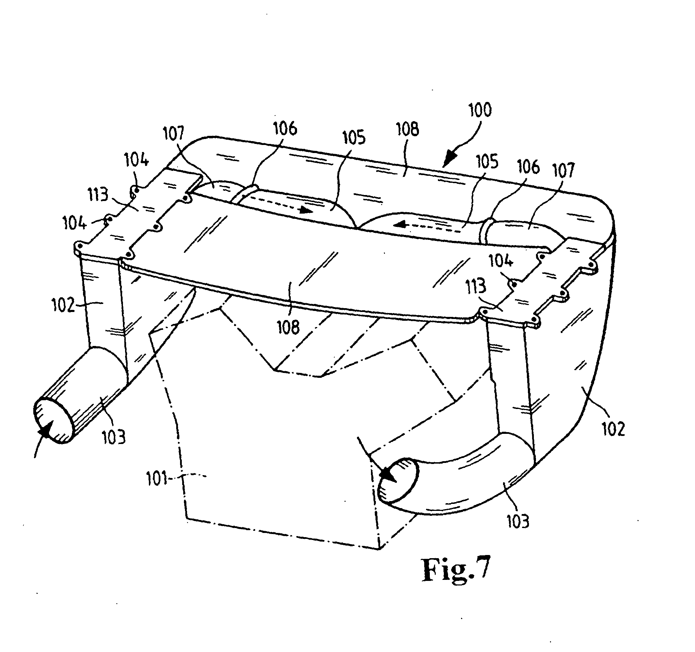

Gemäß Figur 7 ist eine Filtervorrichtung 100 dargestellt, welche für eine schematisch dargestellte Brennkraftmaschine 101 vorgesehen ist. Hierbei kommen zwei Filtergehäuse 102 zur Anwendung, welche rechts und links des Motors 101 angeordnet sind und getrennte Luftansaugungen 103 aufweisen.

Die Filtergehäuse 102 sind mit Schachtdeckeln 113 versehen, welche einen unproblematischen Ausbau der nicht näher dargestellten Filterelemente aus den Filtergehäusen 102 ermöglichen. Die Schachtdeckel 113 sind mittels Schrauben 104 gesichert.

Weiterhin sind Auslassrohre 105 vorgesehen, welche mittels einer Flanschverbindung 106 an Auslässe 107 der Filtergehäuse 102 angeschlossen sind und für eine Durchleitung der gereinigten Ansaugluft entsprechend der gestrichelt dargestellten Pfeile in den Zylinderkopf der Brennkraftmaschine 101 sorgen. Über Abdeckungen 108 sind die beiden Filtergehäuse 102 miteinander verbunden, wobei die Abdeckung zu einer Geräuschdämmung der Brennkraftmaschine führen.

## Patentansprüche

1. Einschubfilter (10) zur Reinigung eines Gasstromes, insbesondere für die Ansaugluft einer Brennkraftmaschine oder einer Klimaanlage,
welcher in einem Schacht (14) eines gasführenden Leitungssystems(15) austauschbar angeordnet ist und eine Rohseite (16) von einer Reinseite (17) trennt, und
welcher einen Filterrahmen (11), ein von dem Filterrahmen (11) gestütztes Filterelement (12), und einen Schachtdeckel (13) aufweist, wobei der Schachtdeckel (13) gesondert ausgeführt und mit dem Filterrahmen (11) verbunden ist, wobei der Filterrahmen (11) unter ausschließlicher Verwendung des Schachtdeckels (13) aus dem Schacht (14) entfembar ist
**dadurch gekennzeichnet, dass**
der Filterrahmen (11) eine Rahmenwand (18) aufweist, welche einen Filterbereich (51) umschließt, wobei die Rahmenwand (18) schräg zum Filterbereich (51) verläuft, wodurch das Filterelement (12), welches durch ein Filtervlies gebildet ist, in der Nähe der Rahmenwand (18) verdichtet ist.

2. Einschubfilter (10) nach Anspruch 1, **dadurch gekennzeichnet, dass** der Schachtdeckel (13) mit Schnapphaken (39) lösbar mit dem Filterrahmen (11) verbunden ist.

3. Einschubfilter (10) nach Anspruch 1 oder 2, **dadurch gekennzeichnet, dass** an dem Schachtdeckel (13) eine integrierte Entnahmehilfe (28), insbesondere eine Aushebelasche (48), angeordnet ist.

4. Einschubfilter (10) nach einem der vorangehenden Ansprüche, **dadurch gekennzeichnet, dass** zwischen dem Schachtdeckel (13) und dem Schacht (14) eine Deckeldichtung (27) vorgesehen ist.

5. Einschubfilter (10) nach einem der vorangehenden Ansprüche, **dadurch gekennzeichnet, dass** der Filterrahmen (11) über eine umlaufende Rahmendichtung (26) verfügt, welche sich an dem Schacht (14) abstützt.

6. Einschubfilter (10) nach Anspruch 5, **dadurch gekennzeichnet, dass** die umlaufende Rahmendichtung (26) im Zwei-Komponentenspritzguss an den Filterrahmen (11) angespritzt ist

7. Einschubfilter (10) nach einem der vorangehenden Ansprüche, **dadurch gekennzeichnet, dass** zur Stabilisierung des Filterelementes (12) ein Stützkreuz (36) an dem Filterrahmen (11) angeordnet ist.

8. Einschubfilter (10) nach einem der vorangehenden Ansprüche, **dadurch gekennzeichnet, dass** das Stützkreuz (36) mit einer Feder-Nut-Verbindung mit dem Filterrahmen (11) verbunden ist.

9. Einschubfilter (10) nach einem der vorangehenden Ansprüche, **dadurch gekennzeichnet, dass** der Einschubfilter (10) über eine Führungsleiste (49) verfügt, welche in dem Schacht (14) geführt ist.

10. Einschubfilter (10) nach einem der vorangehenden Ansprüche, **dadurch gekennzeichnet, dass** dieser als Luftfilter im Motorraum einer Brennkraftmaschine verwendet wird, wobei der Luftfilter seitlich eines Motorblocks angeordnet ist und der Deckel (113) nach oben entfernt werden kann, um den darunter liegenden Schacht zum Wechsel des Filterelementes freizugeben.

11. Einschubfilter nach Anspruch 10, **dadurch gekennzeichnet, dass** beidseitig des Motorblocks jeweils ein Luftfilter vorgesehen ist

## Claims

1. Insert filter (10) for cleaning a gas stream, more especially for the intake air of an internal combustion engine or an air-conditioning system,
which filter is interchangeably disposed in a shaft (14) of a gas-conducting duct system (15) and separates an unfiltered side (16) from a filtered side (17), and
which filter has a filter frame (11), a filter element (12) which is supported by the filter frame (11), and a shaft cover (13), the shaft cover (13) being separately constructed and being connected to the filter frame (11), the filter frame (11) being removable from the shaft (14) by the exclusive use of the shaft cover (13),
**characterised in that** the filter frame (11) has a frame wall (18) which surrounds a filter region (51), the frame wall (18) extending inclinedly relative to the filter region (51), whereby the filter element (12), which is formed by a filter web, is compressed in the vicinity of the frame wall (18).

2. Insert filter (10) according to claim 1, **characterised in that** the shaft cover (13) is detachably connected to the filter frame (11) by snap hooks (39).

3. Insert filter (10) according to claim 1 or 2, **characterised in that** an incorporated removal aid (28), more especially a lifting strap (48), is disposed on the shaft cover (13).

4. insert filter (10) according to one of the preceding claims, **characterised in that** a cover seal (27) is provided between the shaft cover (13) and the shaft (14).

5. Insert filter (10) according to one of the preceding claims, **characterised in that** the filter frame (11) has a surrounding frame seal (26) which is supported on the shaft (14).

6. Insert filter (10) according to claim 5, **characterised in that** the surrounding frame seal (26) is injection-moulded on the filter frame (11) by two-component injection moulding.

7. Insert filter (10) according to one of the preceding claims, **characterised in that** a crossbrace (36) is disposed on the filter frame (11) to stabilise the filter element (12).

8. Insert filter (10) according to one of the preceding claims, **characterised in that** the crossbrace (36) is connected to the filter frame (11) by a tongue-and-groove joint.

9. Insert filter (10) according to one of the preceding claims, **characterised in that** the insert filter (10) has a guide strip (49) which extends in the shaft (14).

10. Insert filter (10) according to one of the preceding claims, **characterised in that** said filter is used as an air filter in the engine compartment of an internal combustion engine, the air filter being disposed laterally of an engine block, and the cover (113) being removable upwardly in order to expose the shaft, situated therebeneath, for changing the filter element.

11. Insert filter according to claim 10, **characterised in that** an air filter is provided on each side of the engine block.

## Revendications

1. Filtre encastrable (10) permettant de nettoyer un courant de gaz, notamment pour l'air d'aspiration d'un moteur à combustion interne ou d'une installation de climatisation, placé de manière remplaçable dans un puits (14) d'un système de conduction (15) de gaz, séparant une face brute (16) d'une face pure (17) et présentant un cadre de filtre (11), un élément de filtre (12) soutenu par le cadre de filtre (11) et un couvercle de puits (13), le couvercle de puits (13) étant réalisé à part et étant lié au cadre de filtre (11), ce cadre de filtre (11) pouvant être séparé du puits (14) lors de l'utilisation exclusive du couvercle de puits (13),
**caractérisé en ce que**
le cadre de filtre (11) présente une paroi de cadre (18) qui entoure une zone de filtre (51), la paroi de cadre (18) étant placée inclinée par rapport à la zone de filtre (51), l'élément de filtre (12), composé d'un non-tissé de filtre, étant hermétiquement fermé à proximité de la paroi de cadre (18).

2. Filtre encastrable (10) selon la revendication 1,
**caractérisé en ce que**
le couvercle de puits (13) est relié de manière amovible au cadre de filtre (11) à l'aide de crochets à déclic (39).

3. Filtre encastrable (10) selon la revendication 1 ou 2,
**caractérisé en ce qu'**
un élément d'aide au retrait (28) intégré, notamment une patte de levage (48), est placé sur le couvercle de puits (13).

4. Filtre encastrable (10) selon l'une quelconque des revendications précédentes,
**caractérisé en ce qu'**
un joint de couvercle (27) est prévu entre le couvercle de puits (13) et le puits (14).

5. Filtre encastrable (10) selon l'une quelconque des revendications précédentes,
**caractérisé en ce que**
le cadre de filtre (11) dispose d'un joint de cadre (26) qui l'entoure et qui s'appuie sur le puits (14).

6. Filtre encastrable (10) selon la revendication 5,
**caractérisé en ce que**
le joint de cadre (26) qui l'entoure est moulé sur le cadre de filtre (11) lors d'un moulage par injection à deux composants.

7. Filtre encastrable (10) selon l'une quelconque des revendications précédentes,
**caractérisé en ce qu'**
un croisillon d'appui (36) est placé sur le cadre de filtre (11) pour stabiliser l'élément de filtre (12).

8. Filtre encastrable (10) selon l'une quelconque des revendications précédentes,
**caractérisé en ce que**
le croisillon d'appui (36) est relié au cadre de filtre (11) à l'aide d'une liaison ressort-rainure.

9. Filtre encastrable (10) selon l'une quelconque des revendications précédentes,
**caractérisé en ce que**
le filtre encastrable (10) dispose d'une glissière de guidage (49) qui se dirige dans le puits (14).

10. Filtre encastrable (10) selon l'une quelconque des revendications précédentes,
**caractérisé en ce que**
ce filtre est utilisé dans le compartiment moteur d'un moteur à combustion interne comme filtre à air placé sur le côté d'un bloc moteur, dont le couvercle (113) peut être retiré vers le haut afin de libérer le puits placé au dessous pour changer l'élément de filtre.

11. Filtre encastrable selon la revendication 10,
**caractérisé en ce que**
chaque fois un filtre à air est placé des deux côtés du bloc moteur.
